# EUROPEAN PATENT APPLICATION

(11) **EP 1 547 829 A2**
(43) Date of publication of application: **29.06.2005**
(21) Application number: 04028085.1
(22) Date of filing: 26.11.2004
(51) Int. Cl.: B60F 3/00

(54) **Auxiliary flotation equipment for vehicles supported on tracks or wheels**

(30) Priority: 22.12.2003 IT TO20030198 U
(71) Applicant: G.P.S. S.p.A., 10040 Lombardore (TO) (IT)
(72) Inventor: Bellezza Quater, Walter, 10083 Favria (TO) (IT)
(74) Representative: Spandonari, Carlo

(57) **Abstract**

An auxiliary flotation equipment for vehicles supported on tracks or wheels comprises a bow floating member (12) and a stem floating member (14) which are respectively attachable to the forepart (10a) and to the rear (10b) of the vehicle (10) in respective operative positions for promoting flotation of the vehicle. The equipment comprises guiding means (16a, 16b, 44a, 44b) adapted to guide the floating members in their movement with respect to the vehicle (10) from a rest position, in which they are substantially at ground level, to their respective operative position and vice versa. Motor means (22a, 22b, 44a, 44b) are operatively connected for driving the floating members from their rest position to their operative position and vice versa.

## Description

The present invention relates to an auxiliary flotation equipment for vehicles supported on tracks or wheels.

This kind of vehicle is suitably employed for rescue missions and civil protection, and has a watertight monocoque body that makes it capable of fording water-courses by leaning on the shore below, as well as sailing across limited sheets of water and/or marshlands, though always on shallow waters.

In order to make the vehicle capable of floating and steering also on deep waters, it is known to irremovably attach bow/stern floating members to the frame by watertight welds, thereby turning the vehicle into a real amphibian vehicle.

Since such changes cause irreversible alterations to the vehicle, which becomes larger in size and is reduced in maneuverability, it is also known to removably attach the floating members by screw coupling, so that they can be removed when no longer required.

However, since attaching/detaching the floating members is often to be performed by the crew itself of the vehicle, which consists of a few units, generally in conditions of emergency where accessory lifting/conveying gears are not available, this operation is very laborious and requires considerable effort.

Therefore, a main objet of the present invention is to provide an auxiliary flotation equipment for vehicles supported on tracks or wheels, which is easily attachable/detachable even by a single user, without requiring high effort or accessory equipment.

Another object of this invention is to provide a flotation equipment as above mentioned, which can be adjusted in its attitude of sailing.

The invention will now be described in more detail with reference to the attached drawings shown by way of non-limiting example, wherein:
Fig. 1 is a exploded perspective view of a flotation apparatus according to this invention in association with a vehicle supported on wheels;
Fig. 2 is a perspective, axial section of a detail of the flotation apparatus according to this invention;
Fig. 3 is a sectional view of the detail of Fig. 2 in a different operative position.

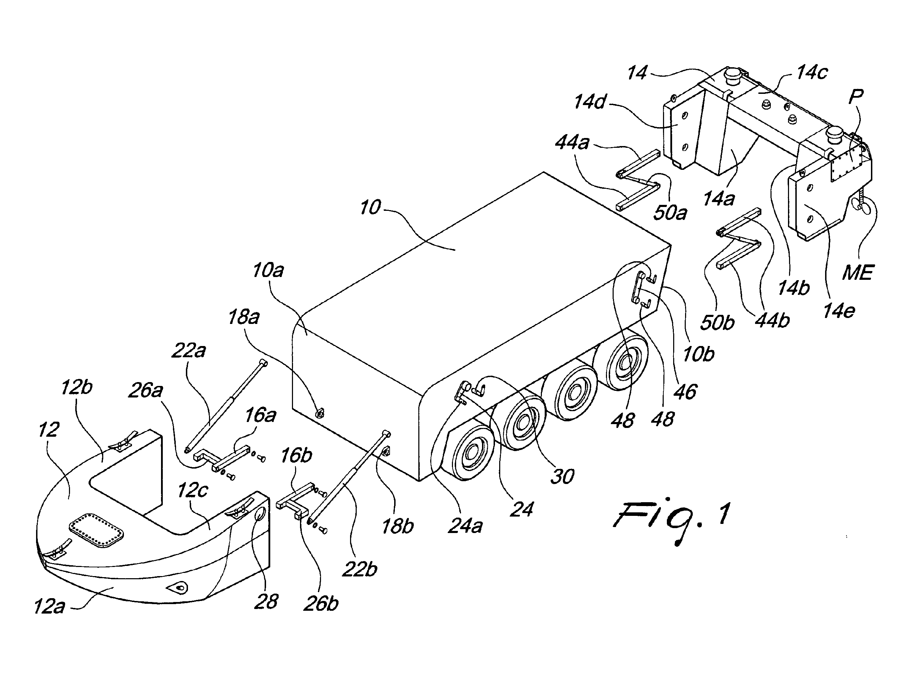

With initial reference to Fig. 1, a general vehicle 10 supported on wheels, for rescue missions and civil protection, has a watertight monocoque body.

An auxiliary flotation equipment comprises a bow floating member 12 and a stem floating member 14, which are respectively attachable to the forepart 10a and to the rear 10b of the vehicle. Bow floating member 12 has a cutwater-shaped, tapered lower surface 12a and two mutually spaced, surrounding side walls 12b, 12c adapted to enclose the body sides of the forepart of the vehicle. Stem floating member 14 has two watertight, lateral compartments 14a, 14b which are bridged by a middle, flat compartment 14c, and two mutually spaced, surrounding side walls 14d, 14e adapted to enclose the body sides of the rear of the vehicle. Stem floating member 14 is also provided with propeller means ME, which are housed in lateral compartments 14a, 14b and are accessible for inspections or maintenance by removing a cover P. Middle, flat compartment 14c incorporates a double fuel tank by which the motor means are supplied.

According to this invention, bow floating member 12 is mounted onto vehicle 10 from the ground by means of a pair of connecting rods 16a, 16b having one end hinged to respective supports 18a, 18b on the forepart of the vehicle, and the opposite end hinged to respective supports (not shown) which are integral with bow floating member 12. A pair of hydraulic cylinders 22a, 22b in their extended configuration are operatively connected between bow floating member 12 and vehicle 10 and have one end hinged to respective supporting plates such as 24, which are attached to the vehicle and are provided with pins 24a, and the opposite end hinged to a respective connection end of connection rod 16a, 16b with bow floating member 12. To this purpose, said connection end is provided with a supplementary connection arm 26a, 26b. Hydraulic cylinders 22a, 22b are operable to withdraw, e.g., by means of a hydraulic pump (not shown), in order to lift up bow floating member 12 to its operative position.

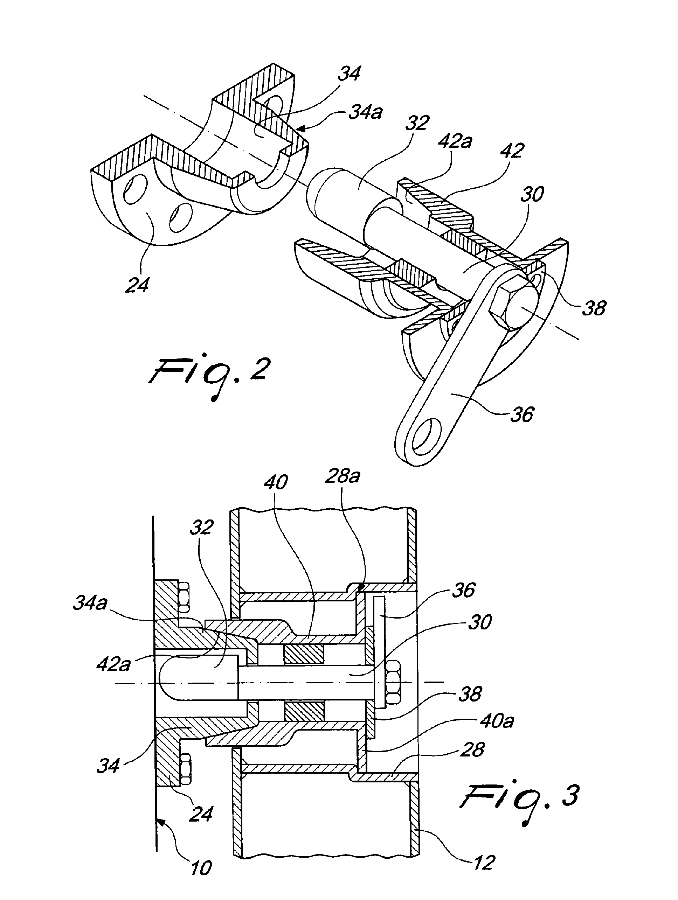

As shown in more detail in Figs. 2, 3, bow floating member 12 has a hole 28 in which is engageable a bolt 30 having an eccentric insertion end 32 adapted to restrainedly engage a corresponding seat 34 of supporting plate 24. The opposite end of bolt 30 is provided with a handle 36 adapted to engage an inner abutment 28a of hole 28, with interposition of a washer 38. A bush 40 has a flanged end 40a which also is sandwiched between washer 38 and inner abutment 28a, and an opposite end 42 having a conical inner surface 42a adapted to cooperate with an outer matching surface 34a of seat 34 for centering purposes.

Similarly, stem floating member 14 is mounted onto vehicle 10 from the ground by means of two pairs of connecting rods 44a, 44b, a pair for each body side, which are arranged in a four-bar linkage configuration with one end hinged to stem floating member 14 and the opposite end hinged to respective supporting plates such as 46 attached to the vehicle by means of bolts 48. A pair of hydraulic cylinders 50a, 50b are operatively connected between two opposite vertices of the four-bar linkages, and, with the stem floating member 14 resting on the ground, they are in their extended configuration. Hydraulic cylinders 22a, 22b also are operable to withdraw, e.g., by means of a hydraulic pump (not shown).

When installing, connection rods 16a, 16b and 44a, 44b and respective hydraulic cylinders 22a, 22b and 50a, 50b are connected as above-described, with bow floating member 12 and stem floating member 14 respectively lying on the ground nearby the forepart and the rear of the vehicle. By operating the hydraulic cylinders to withdraw, by means of a hydraulic pump or the like, the floating members are lifted up to their operative position. Thereafter, bow floating member 12 is secured by bolts 30, with conical surfaces 34a and 34b mutually engaged for an accurate placement. The position of stem floating member 14 is adjustable for height in relation to the operative conditions of the vehicle; particularly, the floating member will be lifted up to its uppermost position when running on the road, while an arrangement that is substantially aligned with the vehicle will be preferred for sailing. In this case, however, the position of the stem floating member is adjustable, e.g., on the basis of the shipment conditions of the vehicle, in order to optimize its sailing attitude and to provide constant immersion of the propellers.

A preferred embodiment of the invention has been described herein, but of course many changes may be made by the person skilled in the art, depending on the requirements, within the scope of the inventive concept.

## Claims

1. An auxiliary flotation equipment for vehicles supported on tracks or wheels, comprising a bow floating member (12) and a stem floating member (14) which are respectively attachable to the forepart (10a) and to the rear (10b) of the vehicle (10) in respective operative positions for promoting flotation of the vehicle, **characterized in that** it comprises guiding means (16a, 16b, 44a, 44b) adapted to guide at least one of said bow floating member (12) and stem floating member (14) in their movement with respect to the vehicle (10), from a rest position, in which the floating member is substantially at ground level, to its respective operative position and vice versa, and motor means (22a, 22b, 44a, 44b) which are operatively connected for driving said at least one of said bow floating member (12) and stem floating member (14) from said rest position to said operative position and vice versa.

2. The flotation equipment of claim 1, **characterized in that** said guiding means comprise at least one connecting rod (16a, 16b) having one end hinged to the forepart of the vehicle and the opposite end hinged to the bow floating member (12).

3. The flotation equipment of claim 1 or 2, **characterized in that** said motor means comprise a hydraulic cylinder (22a, 22b) having one end hinged to the vehicle (10) and the opposite end operatively connected for driving the bow floating member (12) from said rest position to said operative position and vice versa, under control of the cylinder.

4. The flotation equipment of claim 3, **characterized in that** it comprises locking means (28-42b) for securing the bow floating member (12) to the vehicle (10) in said operative position.

5. The flotation equipment of claim 4, **characterized in that** said locking means comprise a bolt (30) receivable within a housing (28) of said bow floating member (12) and engageable in a seat (34) integral with the vehicle (10).

6. The flotation equipment of any of claims 1-5, **characterized in that** said bow floating member (12) and vehicle (10) have respective complementary surfaces (34a, 42a) which are mutually engageable, with said bow floating member (12) arranged in its operative position, for centering purposes.

7. The flotation equipment of any of claims 1-6, **characterized in that** said bow floating member (12) has a cutwater-shaped, tapered lower surface (12a).

8. The flotation equipment of any of claims 1-7, **characterized in that** said bow floating member (12) has two mutually spaced, side walls (12b, 12c) adapted to enclose the body sides of the forepart of the vehicle in said operative position.

9. The flotation equipment of any of claims 1-8, **characterized in that** said guiding means comprise at least one connecting rod (44a, 44b) having one end hinged to the rear (10b) of the vehicle and the opposite end hinged to the stem floating member (14).

10. The flotation equipment of claim 9, **characterized in that** said guiding means comprise at least one pair of connecting rods (44a, 44b) arranged in a four-bar linkage configuration and having one end hinged to the stern floating member (14) and the opposite end hinged to the vehicle (10).

11. The flotation equipment of claim 10, **characterized in that** said motor means comprise a hydraulic cylinder (50a, 50b) which has its opposite ends hinged to two opposite vertices of the four-bar linkage and is operable for driving the stem floating member (14) from said rest position to said operative position and vice versa.

12. The flotation equipment of any of claims 9-11, **characterized in that** said stem floating member (14) is provided with propeller means (ME).

13. The flotation equipment of any of claims 9-12, **characterized in that** said stem floating member (14) has two watertight, lateral compartments (14a, 14b) bridged by a middle compartment (14c).

14. The flotation equipment of any of claims 9-13, **characterized in that** said stem floating member (14) has two mutually spaced, side walls (14d, 14e) adapted to enclose the body sides of the rear of the vehicle in the operative position.
